# EUROPÄISCHE PATENTSCHRIFT

(11) **EP 0 598 188 B1**
(45) Veröffentlichungstag und Bekanntmachung des Hinweises auf die Patenterteilung: **23.04.1997**
(21) Anmeldenummer: 93112674.2
(22) Anmeldetag: 07.08.1993
(51) Int. Cl.: F16F 13/00

(54) **Hydraulisch dämpfendes Motorlager**
Hydraulically-damped engine mount
Support moteur à amortissement hydraulique

(30) Priorität: 17.11.1992 DE 4238752
(43) Veröffentlichungstag der Anmeldung: 25.05.1994
(73) Patentinhaber: BOGE GmbH, D-53175 Bonn-Bad Godesberg (DE)
(72) Erfinder: Quast, Jörn-Rainer, W-5485 Sinzig 2 (DE)

(56) Entgegenhaltungen:
- EP-A- 0 071 698
- EP-A- 0 413 083
- DE-A- 3 446 725
- FR-A- 2 627 564
- US-A- 4 828 234
- US-A- 4 840 358
- US-A- 5 205 546
- PATENT ABSTRACTS OF JAPAN vol. 10, no. 77 (M-464)(2134) 26. März 1986 & JP-A-60 220 239 (TOYOTA JIDOSHA KK) 2. November 1985

## Beschreibung

Die Erfindung bezieht sich auf ein hydraulisch dämpfendes Motorlager mit zumindest teilweise von elastischen Wänden begrenzten, fluidgefüllten Kammern und einer die Kammer trennenden, begrenzt auslenkbaren Membran, mit mindestens einem die Kammern verbindenden Kanal, wobei die Lagercharakteristik durch die Änderung der Steifigkeit einer in einer der Kammern angeordneten flexiblen Wand einstellbar ist, die bei geringer Steifigkeit gegen ein in einem Zwischenraum eingeschlossenes Gasvolumen arbeitet und die bei hoher Steifigkeit zumindest teilweise in Anlage an einen Anschlag kommt, der Zwischenraum hierfür über mindestens eine Strömungsverbindung entlüftbar ist, wobei eine der Strömungsverbindungen ein Rückschlagventil aufweist und eine Strömungsverbindung durch ein Schaltelement beaufschlagbar ist.

Derartige Motorlager sind bereits bekannt (z.B. DE-PS 34 46 725), bei denen zwischen den beiden Kammern eine Trennwand angeordnet ist und daß eine Kammer eine ringförmig an der Außenwand verlaufende elastische Membran aufweist, wobei der von der elastischen Membran mit der starren Außenwand gebildete Zwischenraum zur Erzielung einer hohen Steifigkeit des Motorlagers mit einem Unterdruck beaufschlagbar ist. Soll das Lager im Fahrbetrieb hart geschaltet werden, ist es notwendig, einen Unterdruck an den Zwischenraum zu legen, so daß sich die elastische Wand direkt an die Außenwand des Lagers anlegt. Bei dieser Ausführung ist von Nachteil, daß die Unterdruckversorgung des Zwischenraumes Probleme bereitet, denn es sind starre Leitungen erforderlich, da flexible Zuleitungen bei Auflegung eines Unterdruckes zusammenklappen. Ein Anzapfen der Bremsleitung ist aus sicherheitsrelevanten Gründen nicht möglich. Darüber hinaus bringt eine lange Zuleitung auch in starrer Bauweise den Nachteil mit sich, daß die flexible Wand sich erst am starren Anschlag anlegt, wenn die Restluft aus der Unterdruckleitung ebenfalls abgesaugt ist. Alle diese Nachteile zeigen, daß die Beaufschlagung des Zwischenraumes mit einem Unterdruck für die Praxis nicht geeignet ist.

Aufgabe der Erfindung ist es, ein hydraulisch dämpfendes Motorlager zu schaffen, welches wahlweise hart oder weich gesteuert werden kann, wobei nicht nur ein großer Bauaufwand vermieden werden soll, sondern daß eine einfache und sichere Steuerung in unmittelbarer Nähe des Motorlagers lange Leitungswege vermeidet.

Zur Lösung dieser Aufgabe ist erfindungsgemäß vorgesehen, daß die zur Entlüftung dienende Strömungsverbindung und die der Belüftung dienende Strömungsverbindung als gemeinsame Strömungsverbindung ausgebildet sind, daß als Schalter der Magnetanker eines elektromagnetischen Schaltelementes vorgesehen ist, wobei der Magnetanker direkt oder indirekt in Schließrichtung des Schalteelementes durch Beaufschlagung einer Feder als Rückschlagventil derart ausgebildet ist, daß die gemeinsame Strömungsverbindung zum Entlüften des Zwischenraumes gegen die Kraft der Feder öffnet, und daß der Magnetanker zum Belüften die Strömungsverbindung öffnet .

Hierbei ist von Vorteil, daß der Zwischenraum, der zur Beeinflussung der Federeigenschaften dient, für den Fall, daß das Lager hart geschaltet werden soll, ohne Fremdhilfe entlüftet werden kann. Während des Lagerbetriebes erfolgt ein Pumpen durch die Zug- und Druckbewegungen, so daß der auf die flexible Wand wirkende Innendruck den Zwischenraum über das Rückschlagventil bis zur Anlage der flexiblen Wand an den starren Bauteil entleert. Für die Belüftung des Zwischenraumes ist der Schalter zu öffnen, so daß der Zwischenraum mit der Atmosphäre verbunden wird und die flexible Wand in ihre Grundposition gebracht wird. Es handelt sich demnach um ein einfaches, sicheres Prinzip der Steuerung, indem die elastischen Wände durch ihre Pumparbeit den Zwischenraum über das Rückschlagventil freipumpen, während bei Betätigung des Schalters Gas von der Atmosphäre oder einem Druckspeicher in den Zwischenraum strömt.

Ein wesentliches Merkmal einer Ausgestaltung der Erfindung sieht vor, daß der Querschnitt der Strömungsverbindung so gestaltet ist, daß eine ungedrosselte Gaszufuhr zum Zwischenraum gewährleistet ist.

Eine günstige Ausgestaltung sieht vor, daß der Schalter abhängig von der Motordrehzahl eines Kraftfahrzeuges steuerbar ist. Hierdurch kann die Charakteristik des Lagers gezielt, abhängig von der Motordrehzahl, beeinflußt werden.

Zur Vermeidung von Setzungsverhalten der flexiblen Wand nach längerer Stehzeit des Motors ist vorgesehen, daß eine Steuerung automatisch nach längerer Stehzeit eine Belüftung des Zwischenraumes vornimmt. Diese Steuerung braucht lediglich den Schalter kurzzeitig zu bestromen, so daß der Schalter öffnet, während im stromlosen Zustand der Schalter über eine Feder in Schließstellung gebracht wird.

Eine weitere Beinflussung der Federeigenschaften des Lagers läßt sich erzielen, indem die Strömungsverbindung mit einem Druckspeicher verbunden ist. Der Druckspeicher läßt sich problemlos dem Rückschlagventil nachschalten, so daß eine Belüftung des Zwischenraumes anschließend nur über den Schalter möglich ist.

Bevorzugte Ausführungsbeispiele der Erfindung sind in den Zeichnungen schematisch dargestellt.

Es zeigt:
Figur 1 ein Motorlager im Schnitt mit einem Rückschlagventil und einem Schalter, wobei es sich nicht um ein Ausführungsbeispiel der Erfindung handelt
Figur 2 eine Ausführungsform eines Motorlagers, bei dem das Rückschlagventil im Schalter integriert ist
Figur 3 eine Variante, bei der in der Strömungsverbindung ein Druckspeicher angeordnet ist, die sich jedoch nicht auf die Erfindung bezieht.

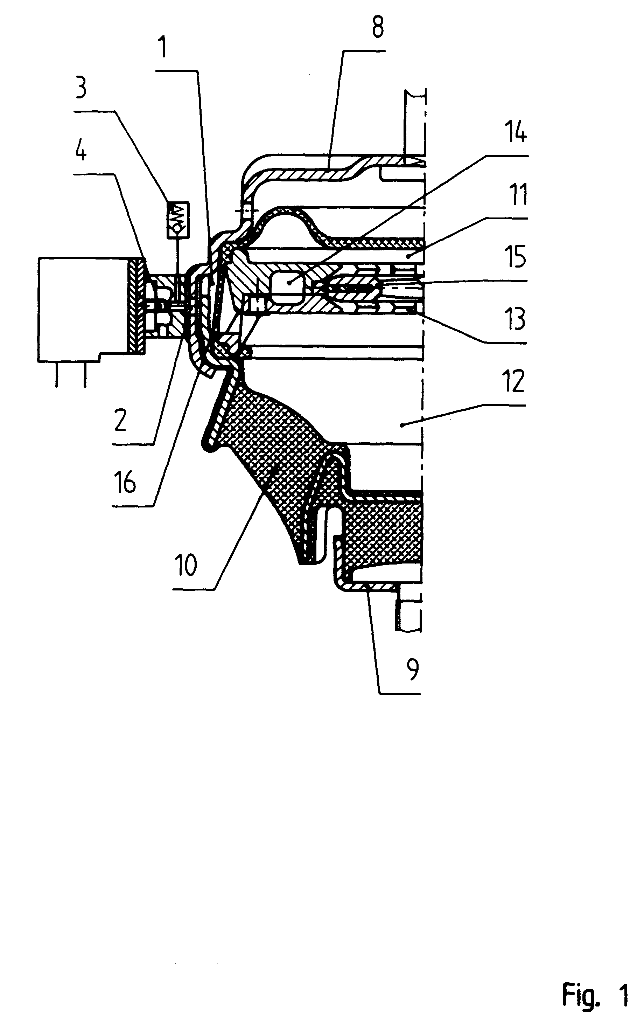

Das in Figur 1 dargestellte hydraulisch dämpfende Motorlager besteht im wesentlichen aus den Befestigungsteilen 8 und 9, der gummielastischen Umfangswand 10, wobei die beiden mit Dämpfungsmittel gefüllten Kammern 11 und 12 durch eine Trennwand 13 getrennt sind. Die Verbindung der beiden Kammern 11 und 12 erfolgt über den Kanal 14. Die auslenkbare Membran 15 dient der Entkopplung von hochfrequenten Schwingungen mit kleinen Amplituden.

Im radialen Randbereich ist eine flexible Wand 16 vorgesehen, die einen Zwischenraum 1 abtrennt, wobei der Zwischenraum 1 über eine Strömungsverbindung 2 einerseits mit einem Rückschlagventil 3 und andererseits mit dem Schalter 4 in Verbindung steht. Zur einwandfreien Funktion des Lagers ist die flexible Wand 16 weicher ausgebildet als die Membran 15, damit durch die Pumpwirkung der gummielastischen Umfangswand 10 zunächst die flexible Wand 16 zur Anlage gelangt, bevor die Membran 15 die entsprechenden Schwingungen entkoppelt.

Durch die Pumpwirkung der gummielastischen Umfangswand 10 erfolgt zunächst bei geschlossenem Schalter 4 ein Entlüften des Zwischenraumes 1 durch die flexible Wand 16, indem bei Druckspitzen das Rückschlagventil 3 öffnet. Dieser Vorgang wiederholt sich so lange bis der Zwischenraum 1 entlüftet und die flexible Wand 16 an der metallischen Seitenwandung zur Anlage kommt. In diesem Ausführungsbeispiel entweicht das Gas des Zwischenraumes 1 über das Rückschlagventil 3 in die Atmosphäre. Wird bei Bedarf der Schalter 4 geöffnet, so strömt wiederum Gas aus der Atmosphäre am Schalter 4 vorbei in den Zwischenraum 1, so daß sich die flexible Wand 16 in die gezeichnete Position bewegt.

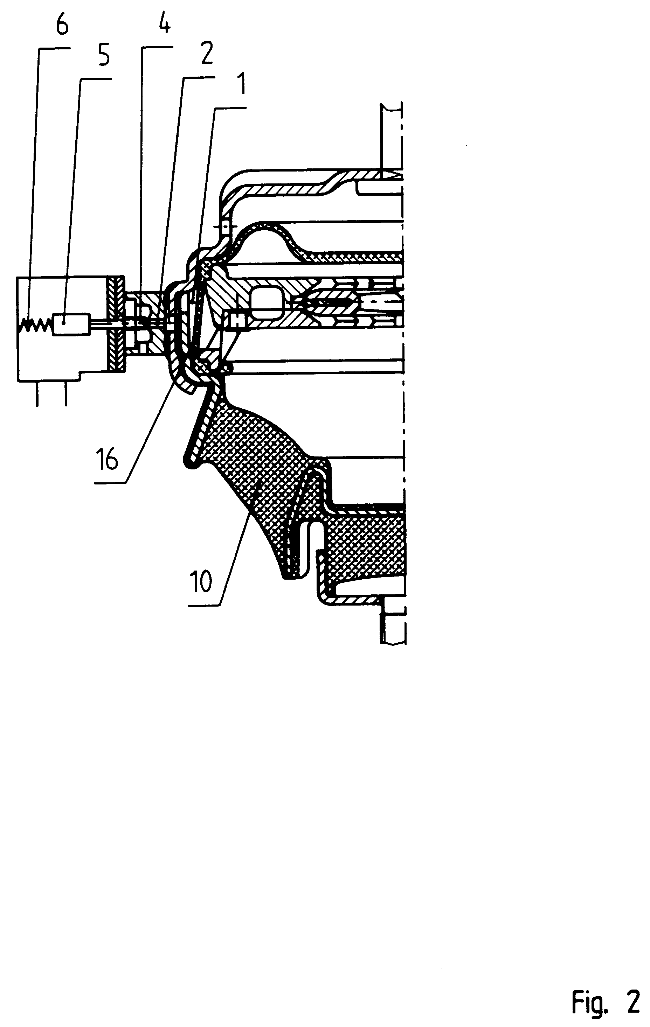

In der Figur 2 ist ein Ausführungsbeispiel dargestellt, welches im Prinzip dem in Figur 1 bereits gezeigten entspricht. Der Schalter 4 wird dabei von einem Elektromagneten beaufschlagt, dessen Magnetanker 5 gegen eine Feder 6 abgestützt ist. Im stromlosen Zustand hält die Feder 6 über den Schalter 4 die Strömungsverbindung 2 geschlossen, wobei die Feder 6 derart gestaltet ist, daß über die Pumpwirkung der gummielastischen Umfangswand 10 und der flexiblen Wand 16 ein Abheben des Schalters 4 gegen die Feder 6 möglich ist, so daß der Zwischenraum 1 entlüftet werden kann. Wird der Elektromagnet bestromt, so wird über den Magnetanker 5 der Schalter 4 gegen die Kraft der Feder 6 geöffnet, so daß eine Belüftung des Zwischenraumes 1 aus der Atmosphäre erfolgen kann.

Bei allen Ausführungsbeispielen ist der Zwischenraum 1 größenmäßig derart gestaltet, daß eine möglichst schnelle Entlüftung erfolgen kann, wozu auch eine möglichst kurze Strömungsverbindung 2 benötigt wird.

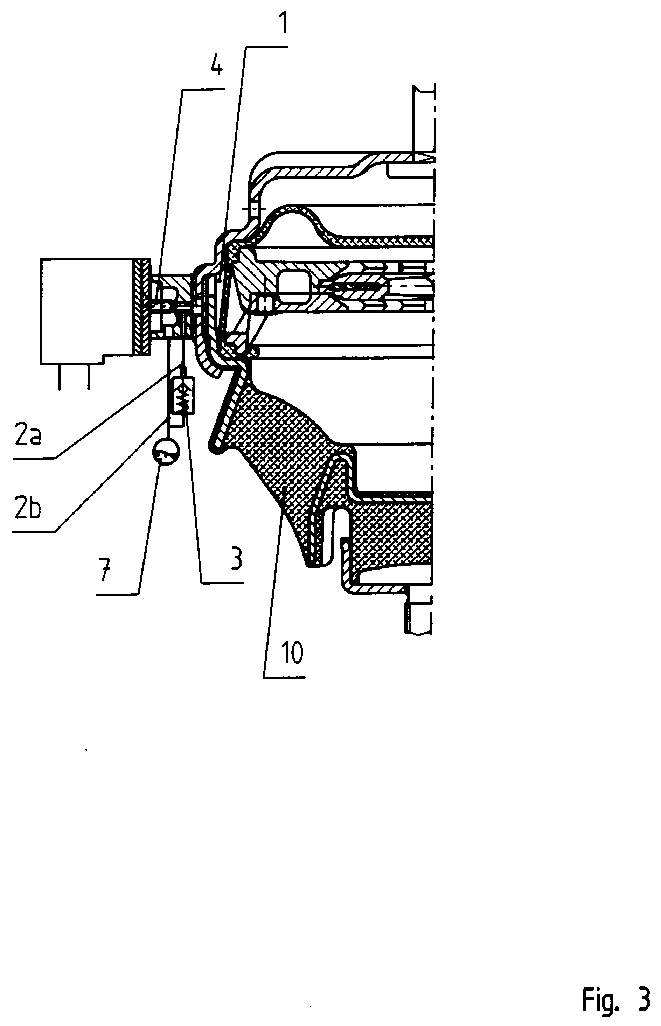

In der Figur 3 ist eine Variante des Motorlager dargestellt, indem die das Rückschlagventil 3 aufweisende Strömungsverbindung 2a sowie die über den Schalter verbundene Strömungsverbindung 2b mit einem Druckspeicher 7 versehen sind. Bei diesem Ausführungsbeispiel wird durch einen entsprechenden Druck im Druckspeicher 7 bei geöffnetem Schalter 4 der Zwischenraum 1 entsprechend druckbeaufschlagt, so daß die Lagercharakteristik entsprechend beeinflußt werden kann. Ansonsten arbeitet auch bei diesem Ausführungsbeispiel die gummielastische Umfangswand 10 über das Rückschlagventil 3 auf den Druckspeicher 7 zur Entleerung des Zwischenraumes 1.

### Bezugszeichenliste

- 1 -: Zwischenraum
- 2 -: Strömungsverbindung
- 3 -: Rückschlagventil
- 4 -: Schalter
- 5 -: Magnetanker
- 6 -: Feder
- 7 -: Druckspeicher
- 8 -: Befestigungsteil
- 9 -: Befestigungsteil
- 10 -: gummielastische Umfangswand
- 11 -: Kammer
- 12 -: Kammer
- 13 -: Trennwand
- 14 -: Kanal
- 15 -: Membran
- 16 -: flexible Wand

## Patentansprüche

1. Hydraulisch dämpfendes Motorlager mit zumindest teilweise von elastischen Wänden begrenzten, fluidgefüllten Kammern und einer die Kammer trennenden, begrenzt auslenkbaren Membran, mit mindestens einem die Kammern verbindenden Kanal, wobei die Lagercharakteristik durch die Änderung der Steifigkeit einer in einer der Kammern angeordneten flexiblen Wand einstellbar ist, die bei geringer Steifigkeit gegen ein in einem Zwischenraum eingeschlossenes Gasvolumen arbeitet und die bei hoher Steifigkeit zumindest teilweise in Anlage an einen Anschlag kommt, der Zwischenraum (1) hierfür über mindestens eine Strömungsverbindung (2) entlüftbar ist, wobei eine der Strömungsverbindungen ein Rückschlagventil (3) aufweist und eine Strömungsverbindung durch ein Schaltelement (4) beaufschlagbar ist,
dadurch gekennzeichnet,
daß die zur Entlüftung dienende Strömungsverbindung und die der Belüftung dienende Strömungsverbindung als gemeinsame Strömungsverbindung (2) ausgebildet sind, daß als Schalter (4) der Magnetanker (5) eines elektromagnetischen Schaltelementes (4) vorgesehen ist, wobei der Magnetanker (5) direkt oder indirekt in Schließrichtung des Schalteelementes (4) durch Beaufschlagung einer Feder (6) als Rückschlagventil derart ausgebildet ist, daß die gemeinsame Strömungsverbindung (2) zum Entlüften des Zwischenraumes (1) gegen die Kraft der Feder (6) öffnet, und daß der Magnetanker (5) zum Belüften die Strömungsverbindung (2) öffnet.

2. Motorlager nach Anspruch 1,
dadurch gekennzeichnet,
daß der Querschnitt der Strömungsverbindung (2) so gestaltet ist, daß eine ungedrosselte Gaszufuhr zum Zwischenraum (1) gewährleistet ist.

3. Motorlager nach Anspruch 1,
dadurch gekennzeichnet,
daß der Schalter (4) abhängig von der Motordrehzahl eines Kraftfahrzeuges steuerbar ist.

4. Motorlager nach Anspruch 1,
dadurch gekennzeichnet,
daß eine Steuerung automatisch nach längerer Stehzeit eine Belüftung des Zwischenraumes (1) vornimmt.

5. Motorlager nach Anspruch 1,
dadurch gekennzeichnet,
daß die gemeinsame Strömungsverbindung (2) mit einem Druckspeicher verbunden ist.

## Claims

1. Engine mounting with fluid-filled chambers at least partially bounded by elastic walls and a diaphragm separating the chambers and capable of limited displacement, with at least one passage connecting the chambers, the characteristic of the mounting being variable by alteration of the stiffness of a flexible wall arranged in one of the chambers, the wall having low stiffness when acting against a gas volume trapped in an intermediate space and having high stiffness when coming at least partially into engagement against a stop, the intermediate space (1) for this purpose being capable of venting through at least one flow connection (2), one of the flow connections having a non-return valve (3) and one flow connection being acted on by a switching element (4),
characterised in that,
the flow connection serving for venting and the flow connection serving for the supply of air are formed as a common flow connection (2), that the armature (5) of an electromagnetic switch element (4) is provided as the switch (4), the armature (5) being formed as a non-return valve directly or indirectly in the closing direction of the switch element (4) by the action of a spring (6), in such a way that the common flow connection opens against the force of the spring (6) for venting the intermediate space (1) and that the armature (5) opens for supplying air to the flow connection (2).

2. Engine mounting according to claim 1,
characterised in that
the cross-section of the flow connection (2) is arranged so that an unrestricted supply of gas to the intermediate space (1) is achieved.

3. Engine mounting according to claim 1,
characterised in that,
the switch (4) is controlled in dependence on the engine speed of a motor vehicle.

4. Engine mounting according to claim 1,
characterised in that,
a control system automatically undertakes a supply of air to the intermediate space (1) after a long period of standing.

5. Engine mounting according to claim 1,
characterised in that,
the common flow connection (2) is connected to a pressure reservoir.

## Revendications

1. Support de moteur à amortissement hydraulique comportant des chambres délimitées du moins partiellement par des parois élastiques et remplies avec un fluide, et un diaphragme à déflexion limitée et séparant les chambres, et comportant au moins un canal qui relie les chambres, dans lequel la caractéristique de support est réglable en modifiant la raideur d'une paroi flexible qui est agencée dans l'une des chambres et qui travaille, lorsque la raideur est faible, contre un volume de gaz enfermé dans une chambre intermédiaire et qui vient du moins partiellement en appui, lorsque la raideur est élevée, contre une butée, ladite chambre intermédiaire (1) pouvant être évacuée à cet effet via au moins une liaison d'écoulement (2), et dans lequel l'une des liaisons d'écoulement présente un clapet anti-retour (3) et une liaison d'écoulement est susceptible d'être sollicitée par un élément de commutation (4), caractérisé en ce que la liaison d'écoulement servant à l'évacuation et la liaison d'écoulement servant à l'amenée d'air sont réalisées sous forme d'une liaison d'écoulement commune (2), en ce que l'armature magnétique (5) d'un élément de commutation électromagnétique (4) sert de commutateur (4), ladite armature magnétique (5) étant réalisée sous forme d'un clapet anti-retour en sollicitant un ressort (6) directement ou indirectement en direction de fermeture de l'élément de commutation (4), de telle sorte que la liaison d'écoulement commune (2) pour évacuer la chambre intermédiaire (1) s'ouvre à l'encontre de la force du ressort (6), et en ce que l'armature magnétique (5) ouvre la liaison d'écoulement (2) pour l'amenée d'air.

2. Support de moteur selon la revendication 1, caractérisé en ce que la section transversale de la liaison d'écoulement (2) est réalisée de manière à assurer une amenée de gaz non étranglée jusque dans la chambre intermédiaire (1).

3. Support de moteur selon la revendication 1, caractérisé en ce que le commutateur (4) peut être commandé en dépendance de la vitesse de rotation du moteur d'un véhicule automobile.

4. Support de moteur selon la revendication 1, caractérisé en ce qu'une commande procède automatiquement à une amenée d'air dans la chambre intermédiaire (1) après une période d'arrêt prolongée.

5. Support de moteur selon la revendication 1, caractérisé en ce que la liaison d'écoulement commune (2) est reliée à un accumulateur de pression.
